Europäisches Patentamt

European Patent Office

Office européen des brevets

(11) Publication number: **0 525 700 A1**

# EUROPEAN PATENT APPLICATION

(21) Application number: **92112805.4**

(22) Date of filing: **27.07.92**

(51) Int. Cl.5: **C05C 3/00**, C05D 1/00, C05G 3/00, C01C 1/248, C01D 5/00

(30) Priority: **01.08.91 US 738829**

(43) Date of publication of application:
**03.02.93 Bulletin 93/05**

(84) Designated Contracting States:
**DE FR GB**

(71) Applicant: **BEPEX CORPORATION**
**333 N.E. Taft Street**
**Minneapolis, Minnesota 55413(US)**

(72) Inventor: **Palcher, Frank J.**
**4101 78th Avenue**
**North Brookln Park, Minnesota 55443(US)**
Inventor: **White, Michael D.**
**5721 Woodstock**
**Golden Valley, Minnesota 55427(US)**

(74) Representative: **Baillie, Iain Cameron et al**
**c/o Ladas & Parry, Altheimer Eck 2**
**W-8000 Munich 2(DE)**

(54) Process for surface treatment of granules.

(57) A process for surface treating granules, as well as the granule product and surface treatment apparatus thereof. Granules, such as ammonium sulfate or potassium sulfate for use in commercial fertilizers, are surface coated with a solvent such as water, and then dried to remove excess solvent. In so doing, the particle surface is slightly softened and then recrystallized in order to enhance its strength. A gentle agitation means like a slowly rotating, cylindrical drum may be used to allow a predetermined amount of time for recrystallization of the granules, as well as to remove sharp corners of the product. The solvent may also include a small amount of solid additive such as starch in order to lend time-release and weather resistance properties to the product.

## BACKGROUND OF THE INVENTION

The present invention relates generally to the manufacture of granules, and more specifically to a manufacturing process which will produce surface hardened granules of generally uniform size distribution.

Several different methods are known in the fertilizer art for producing granulated product from raw material, such as ammonium sulfate or potassium sulfate. One such method involves high pressure compaction of the feed mixture to yield a ribbon or sheet of the material, followed by breakage of the sheet or ribbon in a flake breaker. The broken flakes of fertilizer material are then granulated in crushers. The compaction step may be practiced with the aid of a binder solution, such as brine saturated with soluble constituents of the solid feed, as taught by U.S. Patent No. 2,935,387 issued to Phillips. It may be desirable, however, to forego inclusion of the binder, and use essentially dry feed material in order to avoid adherence of the particles to the compactor rolls, and eliminate a final drying step from the process. Examples of use of substantially dry feed are U.S. Patent Nos. 3,135,473 issued to Schrader et al.; 3,794,478 issued to Dirksen; and 2,917,381 issued to Otto.

As an alternative to compaction/granulation of the particle feed, it is known instead simply to add a binder solution prior to granulation of ammonium sulfate or potassium sulfate. Examples of this process include U.S. Patent Nos. 3,620,709 issued to Petkovsek (magnesium sulfate, potassium sulfate, and starch); 4,554,004 issued to Bierman et al. (urea phosphate); 3,464,809 issued to Hicks (sulfuric acid and ammonia); and 4,589,904 issued to Harrison et al. (ammonium sulfate-sulfuric acid-alum solution and gaseous anhydrous ammonia). Instead of fusing the particles into a solid mass through compaction, the "granulator" merely promotes contact between the particles, which are then agglomerated by means of chemical reactions caused by the binder solution and high temperatures.

It has been found, however, that the finished fertilizer product from such granulation techniques, whether produced through compaction or agglomeration, have deficient strength properties. This is a particular problem in the fertilizer industry, because the bagged product undergoes much beating and abuse during transportation, warehousing, and display at the retail facility before the end user ever purchases it. Such abuse frequently fractures the fertilizer granules into smaller particles, and even powdered fines, thereby diminishing the benefits derived from agglomeration. The fines are especially undesirable in broadcasting applications. Moreover, these manufacturing processes produce granules, which are less uniform in size and shape (i.e., roundness) distribution, which can interfere with homogeneous mixing with other commercially available fertilizer materials, and interfere with flow characteristics of the granules in further processing and end uses.

Perhaps in an effort to make fertilizer granules more weather resistant, efforts have been made to encapsulate them in a protective coating. For example in U.S. Patent No. 4,755,397 issued to Eden et al., the fertilizer core material and a starch or water soluble hydrocolloid are added to a saturated aqueous salt solution. The temperature of the resulting slurry is then raised high enough to disperse the starch in the salt solution (e.g., 120-180°C), and cooled to permit association by means of hydrogen bonding of the particles. Drying of the particle mass produces a starch matrix containing encapsulated material.

In U.S. Patent No. 4,911,952 issued to Doane et al., the core material is blended with an unmodified starch dispersion to form a mixture so that the material is entrapped within a matrix of starch. Upon gelatinization in water and cooling, the amylose fraction of the starch retrogrades more than the amylopectin fraction by associating, becoming insoluble, and then precipitating. Upon drying the resultant starch mixture, the amylose fractions reassociate, thereby encapsulating the fertilizer granules.

While the encapsulation techniques of Eden and Doane envelope the granules in a starch protective coating, thereby lending time-release characteristics to the particles upon application to the soil, and promoting some degree of weather resistance to the particles, these processes do nothing to enhance the overall strength of the product. Moreover, these encapsulation techniques are expensive and intricate to undertake as part of a manufacturing process, especially in high-volume commodity products.

## SUMMARY OF THE INVENTION

Accordingly, it is an object of the present invention to provide a method for preparing fertilizer granules having a hardened surface to promote strength, as well as generally uniform size and shape distribution.

Another object of the present invention is to obtain such desirable particle characteristics in a simple and relatively inexpensive process without the need to resort to intricate encapsulation techniques.

Yet another object of the present invention is to obtain granules prior to surface treatment without use of binder solutions, thereby maintaining the fertilizer value of the raw material.

Briefly, the invention is directed to providing a process for surface treating granules in order to enhance the strength thereof, as well as to promote uniform size and shape distribution. Granules produced by compaction and granulation techniques commonly known in the art are surface coated with a solvent so that the solvent distributed upon each particle comprises 0.5-10% of its weight, on average, and the solvent partially dissolves the particle surface. The coated granules are then dried in order to remove a substantial portion of the residual solvent, and promote recrystallization of the particle surface. The solvent generally used is water, but a small amount of solid additive in slurry or solution form may also be included, such as starch, in order to impart enhanced weather resistance and time-release properties. Upon surface coating, the particles may also be retained for a predetermined time period in a gentle agitation device, such as a slowly rotating drum, in order to allow better particle coating, provide residence time for recrystallization, and polish sharp corners of the particles.

## BRIEF DESCRIPTION OF THE DRAWINGS

Figure 1 is a diagrammatic representation of a compaction/granulation system used in the present invention; and
Figure 2 is a diagrammatic representation of a coating/drying system used in the present invention.

## DETAILED DESCRIPTION OF THE PREFERRED EMBODIMENT

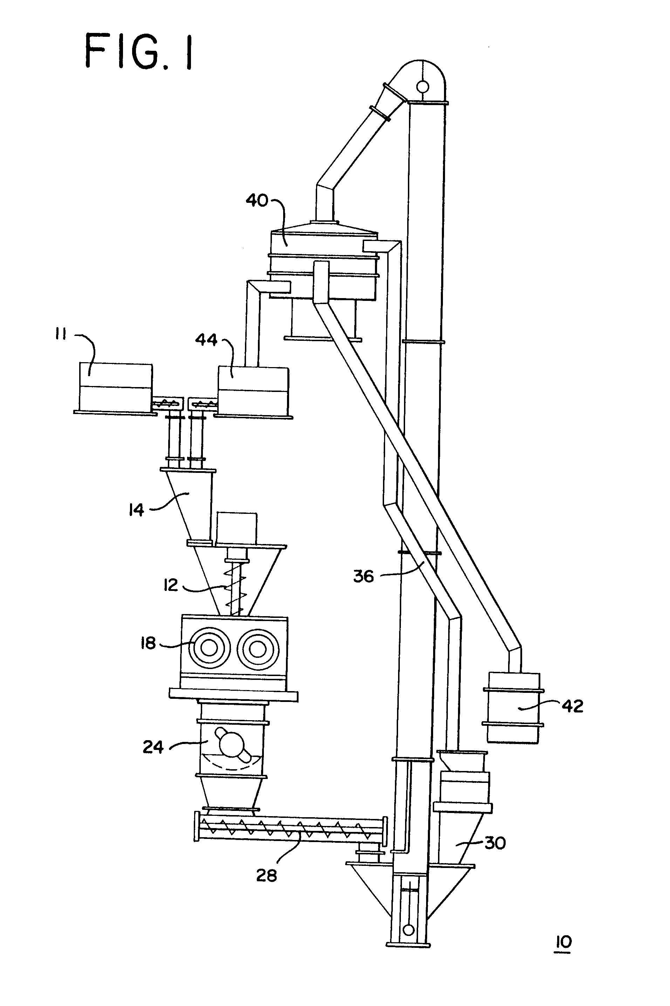

The invention, together with further objects and advantages thereof, will be best understood by reference to the following specification and working examples. Figure 1 illustrates in general form a typical compaction system 10 for carrying out the process. Fertilizer component, whether ammonium sulfate, potassium sulfate, or some other suitable ingredient, is loaded into material feed bin 11. From here, the feed material is metered into the compactor feed hopper 14. The feed mixture is passed at a predetermined rate by feeder 12 into double-roll compactor 18. Two counter-rotating rolls of the compactor draw material into a pinch point and apply high pressure, thereby converting it into a highly dense flake. The flake, in turn, passes down through flake breaker 24, which divides the compacted flake into rough pieces by means of rotating cutter(s).

The material from the flake breaker is conveyed to a twin-deck sizing screen 40, where the stream is divided into three fractions. The oversized fraction (those particles larger than the specified product) is conveyed into granulator 30. The discharge of the granulator is again conveyed to the screener. The undersized material (those particles smaller than the specified product) is retained in recycle bin 44 for metering back to the compactor. The "onsized" granules leave the screening system 40, and are routed to the product drum 42. Since no binders are added, finished granules with the proper size distribution and chemical makeup are produced.

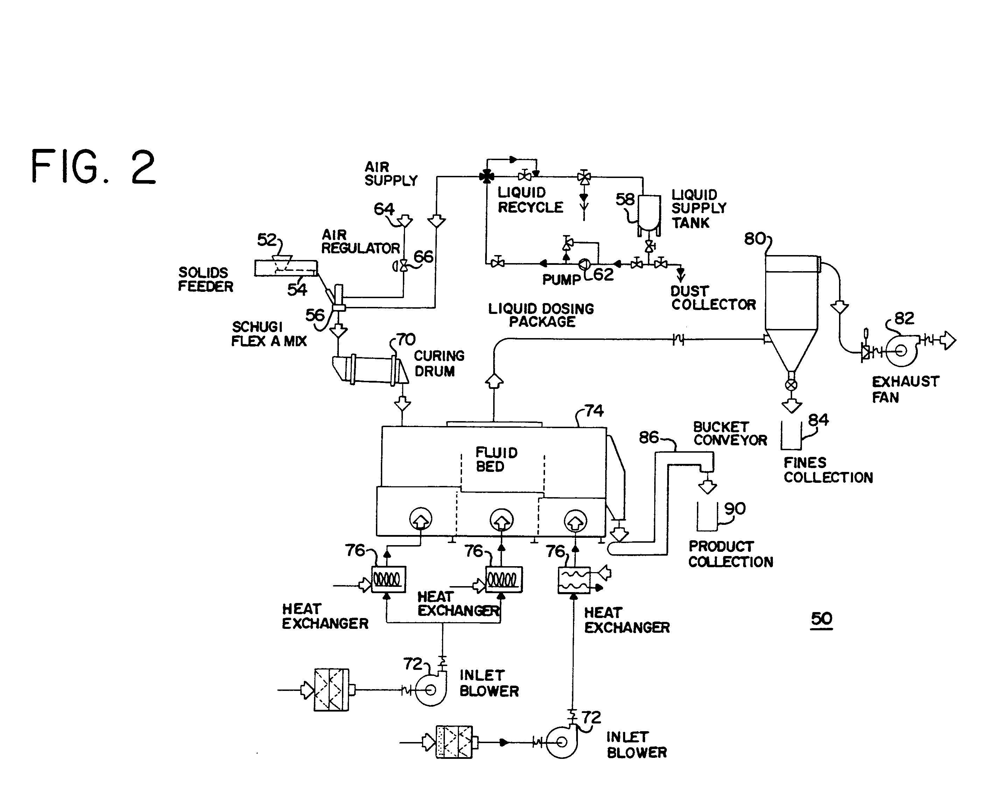

The resulting fertilizer granules are then fed to solids feeder 52 of surface treatment system 50 depicted in Fig. 2. By means of conveyor belt 54, the granules are passed into a spray coating system 56, such as the Bepex Schugi Flexomix. A supply of water held in liquid supply tank 58, is ready for mixing with the granules. The solution is conveyed by means of pump 62 into the top of the Schugi coating system, where it is combined by an air supply 64 passing through air regulator 66. The water is sprayed onto the granules at ambient temperature and pressure, and the Schugi coating system ensures a uniform distribution of the starch solution onto the fertilizer granules. The water preferably comprises 1-2% of the total granule weight.

The coated granules next pass to a rotating curing drum 70 in which the water, which has slightly dissolved the exterior granule surface, causes recrystallization of the granule surface to promote hardness. Not only does the conditioning drum 70 provide "dwell time" to the process to facilitate this recrystallization reaction, but also it polishes the granules by rounding off the surface area and removing any fines. At the same time, the water may act as a mild binder to permit a portion of these fines to agglomerate with smaller granules in the curing drum.

Finally, the surface treated granules are dried in a fluid-bed dryer system 74 at approximately 260° F to remove excess water. Heat is provided by inlet blowers 72 and heat exchangers 76. The fluidized bed dryer 74 likewise contributes to further rounding and polishing of the granules. The dried granules are screened for final sizing. Any undersize granules are removed by dust collector 80, operated by means of exhaust fan 82, and deposited into fines collection bin 84. The finished granule product, meanwhile, is passed by means of bucket conveyor 86 into product collector 90. If an undesirable amount of fines are experienced at the product discharge, an optional screening step is added.

In order to impart time-release or weather resistant properties to the particles, it may be desirable to include in the solvent a slow dissolving material that may partially or fully coat the particle, resulting in a

3

superior particle. Such a material may be starch.

The process yields rounded, surface-treated, dust-free, hardened granules, which are suitable for handling and transportation, and used in commercial fertilizers.

## EXAMPLES

The following examples illustrate the process in a lab pilot system. A number of trials were run, varying the process parameters. The procedure used in each case follows. The batch operation described was a requirement of the lab equipment. In a full-scale system, the system would be continuous in nature.

The ammonium sulfate feed was fine, brown granular material mostly between 16 and 50 Tyler-mesh in size. Two different feed lots were used: one which arrived shortly before testing, and one which had been stored for some time ("new" and "old," respectively). Both feed mixtures, however, had similar particle size distributions, bulk densities, and moisture contents.

The ammonium sulfate feed was roll compacted, applying a relatively high pressing force (16 tons/inch) by means of a Bepex MS 60 Compactor. The compacted material was then granulated in a Bepex RD-8 Disintegrator with a 5/8" round hole screen and rotor speed of 1000 rpm to a size between 4-mesh and 8-mesh. Undersize material was recycled to the compactor.

Five runs of the compacted granules from the new feed, and two runs derived from the old material were then coated under the following conditions:

| Run Conditions | Run 1 | 2 | 3 | 4 | 5 | 6 | 7 |
|---|---|---|---|---|---|---|---|
| Feed | New | New | New | New | New | Old | Old |
| Feed Rate (lbs/hr) | 800 | 800 | 800 | 800 | 1300 | 800 | 800 lb. |
| Tumbling drum | No | No | Yes | Yes | Yes | Yes | Yes |
| Binder Added | 2% of 5% starch solution | 2% water | 2% of 5% starch solution | 2% water | 2% water | 2% water | 2% water |
| Drying Temp. (°F) | 275 | 275 | 275 | 275 | 325 | 275 | 275° |
| Coating System | Schugi* | Schugi* | Schugi* | Schugi* | Schugi* | Schugi* | Turbulizer** |

* Schugi Flex-a-Mix Model FX-160 operated at a motor speed of 1000 rpm and a blade angle of +50°.

** Turbulizer Model TCS-8 operated at a rotor speed of 360 rpm.

In order to test the product, an attrition test was developed as follows:

Fifty grams of coated material screened to 8 x 10 Tyler-mesh was placed on a 16-mesh Tyler screen with 36 5/8" stainless steel balls. This was run on a Tyler sieve shaker Model FX-86 for 10 minutes to simulate rough handling and transportation of the product. The amount of material passing through the 16-mesh screen was calculated, and is shown below.

| Attrition values (%) | | | | | | | |
|---|---|---|---|---|---|---|---|
| Run | 1 | 2 | 3 | 4 | 5 | 6 | 7 |
| Granules From Compation System | 24.16 | 14.18 | 19.22 | 15.92 | 15.04 | 32.84 | 23.66 |
| Granules From Coating System | 3.30 | 3.60 | 2.20 | 1.90 | 1.60 | 2.00 | 1.65 |

Thus, it can be seen that the surface treatment process reduced the amount of fines generated by attrition from 13-33% to less than 4%, and to less than 2% when the tumbling drum was used. This demonstrates that the surface treated granules exhibit much greater surface strength and uniform size distribution than particles which have merely been compacted and granulated.

While particular embodiments of the invention have been shown and described, it should be understood that the invention is not limited thereto, since many modifications may be made to the process. For example, feed materials other than ammonium sulfate, potassium sulfate, or even fertilizer constituents could be employed. The invention, therefore, is contemplated to cover by the present application any and all modifications which fall within the true spirit and scope of the basic underlying principles disclosed and claimed herein.

## Claims

1. A process for surface treating particles of a crystalline material, comprising:
   (a) feeding particles falling generally within a desired size distribution range to an intensive mixer;
   (b) coating the surface of the particles with a solvent so that the solvent distributed upon each particle comprises 0.5-10% of its weight, and the solvent partially dissolves the particle surface; and
   (c) drying the coated particles in a direct-type agitated dryer in order to remove a substantial portion of the residual solvent, whereby the resulting surface-treated particles have enhanced strength through recrystallization of the particle surface, and uniform size distribution.

2. A surface treatment process as recited in claim 1, further comprising screening of the surface-treated particles to remove particles falling below a predetermined size distribution.

3. A surface treatment process as recited in claim 1, further comprising gentle agitation of the solvent coated particles to provide better particle coating, provide residence time for recrystallization, and to abrade sharp corners of the particles.

4. A surface treatment process as recited in claim 3, wherein the gentle agitation step is carried out by a tumbling drum.

5. A surface treatment process as recited in claim 1, wherein the coating process is carried out by a solvent sprayer.

6. A surface treatment process as recited in claim 1, wherein the crystalline particles comprise ammonium sulfate.

7. A surface treatment process as recited in claim 1, wherein the crystalline particles comprise potassium sulfate.

8. A surface treatment process as recited in claim 1, wherein the solvent consists essentially of water.

9. A surface treatment process as recited in claim 1, wherein the solvent further comprises a small amount of solid additive in slurry or solution form, whereby the resulting surface-treated particles are imparted with enhanced weather resistant and time-release properties.

10. A surface treatment process as recited in claim 9, wherein the solid additive comprises starch.

11. A surface treatment process as recited in claim 1, wherein the feed particles of generally uniform size distribution are produced by a method, comprising compacting particles of the same crystallized feed material in a mechanical compactor, dividing the compacts in a size reducer, granulating the divided pieces to a preselected size in at least one crusher, and screening the granulated particles to remove undersized and oversized particles.

12. A surface-treated crystallized particle prepared by a process as defined by claim 1.

13. An apparatus for producing surface-treated crystallized particles having enhanced strength and uniform size distribution, comprising:
    (a) a feed bin for the particles;
    (b) compactor means for converting the particles from the feed bin into a highly dense flake under high pressure;
    (c) flake breaking means for dividing the compacted flake cake into rough pieces;
    (d) crushing means for converting the rough pieces to granules of preselected size;
    (e) screening means for removing oversized or undersized granules for return to the feed bin;

(f) coating means for coating the surface of the granules with a solvent;

(g) drying means for removal of excess solvent; and

(h) screening means for removal of appropriately sized surface-treated granules, the remaining granules for return to the feed bin.

14. An apparatus as recited in claim 13, wherein the compactor means comprises two counter-rotating drums.

15. An apparatus as recited in claim 13, wherein the coating means comprises a continuous mixer with associated solvent sprayer and granule agitation means.

16. An apparatus as recited in claim 15, wherein the mixer is vertically oriented with flexible walls.

17. An apparatus as recited in claim 13, further comprising retaining means positioned after the coating means for gently agitating the coated granules.

18. An apparatus as recited in claim 17, wherein the retaining means comprises a horizontal, cylindrical drum rotated slowly about its longitudinal axis.

19. An apparatus as recited in claim 13, wherein the drying means comprises a fluid-bed dryer.

20. An apparatus as recited in claim 13, wherein the solvent consists essentially of water.

21. An apparatus as recited in claim 13, wherein the solvent further comprises solid additive in slurry or solution form.

22. An apparatus as recited in claim 21, wherein the solid additive comprises starch.

23. An apparatus as recited in claim 13, wherein the crystallized particles comprise ammonium sulfate.

24. An apparatus as recited in claim 13, wherein the crystallized particles comprise potassium sulfate.

# FIG. I

10

# FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 523 110 (IMPERIAL CHEMICAL INDUSTRIES) <br> * claims 1,3,4,7 * | 1,3,4,8, 12 | C05C3/00 <br> C05D1/00 <br> C05G3/00 |
| A | * page 1, paragraph 4 -paragraph 5 * <br> --- | 5,9 | C01C1/248 <br> C01D5/00 |
| A | FR-A-2 061 865 (BLANCS MINERAUX DE PARIS) <br><br> * claims 1-3,5,7 * <br> * page 2, line 12 - page 3, line 12 * <br> --- | 1,5, 8-10,12 | |
| A | US-A-2 917 381 (H.O. MANHASSET) <br><br><br> * claim 1 * <br> * column 3, line 46 - column 4, line 46 * <br><br> ----- | 1,6,11, 13,14, 18,19,23 | |

| | TECHNICAL FIELDS SEARCHED (Int. Cl.5) |
|---|---|
| | C05C <br> C05D <br> C05G <br> C01C <br> C01D |

The present search report has been drawn up for all claims

| Place of search | Date of completion of the search | Examiner |
|---|---|---|
| THE HAGUE | 01 OCTOBER 1992 | RODRIGUEZ FONTAO M. |